# FASCICULE DE BREVET EUROPEEN

(11) **EP 0 495 700 B1**
(45) Date de publication et mention de la délivrance du brevet: **23.04.1997**
(21) Numéro de dépôt: 92400075.5
(22) Date de dépôt: 13.01.1992
(51) Int. Cl.: C04B 35/532

(54) **Procédé de densification d'un substrat poreux par une matrice contenant du carbone**
Verfahren zur Verdichtung eines porösen Substrats mittels einer kohlenstoffhaltigen Matrix
Method of densification of a porous substrate by a matrix containing carbon

(30) Priorité: 18.01.1991 FR 9100592
(43) Date de publication de la demande: 22.07.1992
(73) Titulaire: SOCIETE EUROPEENNE DE PROPULSION, 92150 Suresnes (FR)
(72) Inventeur: Bernard, Bruno C., Les Cottages, F-33320 Eysines (FR); Robin-Brosse, Christian, F-33160 Le Haillan (FR); Cavalier, Jean-Claude, F-33290 Le Pian Medoc (FR)
(74) Mandataire: Joly, Jean-Jacques

(56) Documents cités:
- EP-A- 0 307 968
- WO-A-86/05774
- FR-A- 2 508 999
- FR-A- 2 526 785
- US-A- 4 937 101

## Description

La présente invention a pour objet un procédé de densification d'un substrat poreux par une matrice contenant du carbone pour obtenir une pièce en matériau composite.

Le domaine concerné par la présente invention est plus particulièrement celui des matériaux composites à renfort fibreux, notamment à renfort en fibres de carbone, et à matrice en carbone ou principalement en carbone.

Les matériaux composites carbone/carbone (C/C) à renfort fibreux et matrice en carbone sont utilisés dans diverses applications qui font appel en particulier à leurs propriétés thermostructurales, c'est-à-dire à leurs performances mécaniques élevées et à leur capacité de conserver ces performances jusqu'à des températures élevées. Ainsi, les matériaux composites C/C sont utilisés dans le domaine du freinage, pour réaliser des disques de frein, notamment des disques de frein d'avion ou de véhicules terrestres, dans le domaine aérospatial, pour réaliser des tuyères de moteurs ou autres éléments de propulseurs ou véhicules spatiaux, ainsi que dans le domaine des biomatériaux.

Une des principales limitations à l'extension de l'utilisation des composites C/C, en dépit de leurs performances, est leur coût de fabrication élevé.

La fabrication d'un composite C/C comprend généralement la réalisation d'un renfort fibreux, ou préforme, et la densification de la préforme par la matrice en carbone.

La préforme est formée à partir par exemple de fils, câbles, feutres, tissus en carbone ou en un précurseur du carbone, le précurseur étant transformé en carbone par traitement thermique avant densification.

La densification est réalisée par voie liquide ou par voie gazeuse.

La voie liquide consiste à imprégner la préforme par une résine à taux de coke élevé, c'est-à-dire une résine laissant un résidu en carbone par traitement thermique. Plusieurs cycles consécutifs comprenant une phase d'imprégnation par la résine suivie d'une phase de polymérisation et d'une phase de carbonisation sont nécessaires pour atteindre un degré de densification suffisant.

La voie gazeuse consiste à réaliser une infiltration chimique en phase vapeur. La préforme est placée dans un enceinte dans laquelle est admise une phase gazeuse laissant un dépôt solide de carbone sur les fibres de la préforme, jusqu'au coeur de celle-ci, dans des conditions particulières de température et de pression. La phase gazeuse est par exemple constituée par un ou plusieurs hydrocarbures donnant du carbone par craquage.

Un inconvénient majeur des procédés de densification ci-dessus tient au temps nécessaire pour atteindre un degré de densification suffisant, en particulier par la voie gazeuse, ce qui explique le coût élevé de fabrication. Ainsi, par exemple, il est fréquent que la densification d'une préforme par du carbone obtenu par infiltration chimique en phase vapeur demande plusieurs centaines d'heures.

En outre, les procédés de densification ci-dessus permettent difficilement d'obtenir une densité homogène. En particulier, en utilisant l'infiltration chimique en phase vapeur, il est pratiquement inévitable que la densification se produise plus rapidement au voisinage de la surface qu'au coeur de la préforme, conduisant à un gradient de densité dans l'épaisseur de la préforme.

Un procédé de réalisation d'un composite alumine-alumine, selon lequel la matrice alumine est obtenue par infiltration d'une poudre d'alumine dans un moule contenant un lit de fibres d'alumine est par ailleurs décrit dans la demande de brevet FR-A-2 526 785. Une barbotine est préparée avec de la poudre d'alumine ayant une granulométrie moyenne d'environ 1 micron, et est introduite à la partie supérieure du moule tandis qu'un vide est formé à la partie inférieure de celui-ci.

Un procédé de densification d'un substrat poreux par immersion dans un bain à pression atmosphérique comprenant une poudre ou des fibres courtes de carbone en dispersion dans un liquide tel qu'une solution de résine phénolique ou furanique, puis par imprégnation par un précurseur de carbone tel qu'un brai, et carbonisation du précurseur, est décrit dans le document EP-A-0 307 968.

La présente invention a pour but de fournir un procédé comprenant également l'imprégnation au moyen d'une barbotine contenant de la poudre très fine de carbone, et d'un précurseur liquide de carbone, et la carbonisation du précurseur pour densifier un substrat par une matrice principalement en carbone.

Ce but est atteint au moyen d'un procédé comprenant, selon l'invention, les étapes qui consistent à :
- placer d'un côté d'un substrat à densifier une barbotine contenant une poudre submicronique de carbone,
- établir une différence de pression pour forcer la barbotine à traverser le substrat,
- filtrer le liquide ayant traversé le substrat pour retenir la poudre de carbone à l'intérieur du substrat,
- lorsque la densification du substrat par la poudre de carbone est terminée, sécher le substrat densifié et transformer en carbone, par carbonisation, le précurseur du carbone introduit au sein du substrat afin de lier la poudre constituant la matrice.

Le précurseur du carbone, par exemple constitué par une résine, peut être introduit au sein du substrat après densification par la poudre de carbone et séchage, la résine donnant la cohésion nécessaire à la matrice en liant les particules de poudre entre elles. Le cycle final d'imprégnation par le précurseur du carbone, polymérisation et carbonisation de celui-ci pourra être répété.

En variante, l'introduction du précurseur de carbone au sein du substrat peut être réalisée simultanément avec la poudre de carbone, le précurseur étant sous forme de liquide mélangé avec la poudre de carbone dans la barbotine.

La concentration en poudre de carbone dans la barbotine est par exemple comprise entre 30 et 50 % en poids.

D'autres poudres pourront être mélangées avec la poudre de carbone dans la barbotine, en particulier des poudres de matériaux inhibiteurs d'oxydation afin de conférer au matériau composite une meilleure tenue en atmosphère oxydante. L'inhibiteur d'oxydation est choisi par exemple parmi le carbure de bore, le nitrure de bore, le carbure de silicium ou un oxyde réfractaire.

Par rapport aux techniques connues de densification par voie liquide ou par voie gazeuse, le procédé selon l'invention permet de réduire la durée de fabrication de façon considérable, tout en donnant une densité constante dans tout le volume du matériau et en procurant aux matériaux des performances comparables voire, sur certains points, supérieures. A titre d'exemple, pour des pièces relativement épaisses (environ 100 mm d'épaisseur) le délai total normal de fabrication en usine peut être ramené à deux semaines au lieu de plusieurs mois par infiltration chimique en phase vapeur.

Le précurseur du carbone utilisé pour l'imprégnation du substrat densifié par la poudre de carbone peut être une résine à taux de cocke relativement élevé, par exemple une résine phénolique ou une résine furanique ou un brai de pétrole ou de houille.

La poudre de carbone utilisée est une poudre submicronique, en particulier du noir de carbone, celui-ci ayant généralement une granulométrie moyenne comprise entre 0,1 et 1 micron.

Après imprégnation par le précurseur du carbone et transformation du précurseur en carbone, il peut être procédé à une étape de graphitation.

Il est ainsi possible de réaliser un matériau composite à matrice graphite par la technique d'aspiration de poudre fine, alors que cette technique, mise en oeuvre directement avec une poudre de graphite, peut poser des problèmes de compaction en raison de la structure lamellaire du graphite.

Un exemple particulier de réalisation de l'invention sera maintenant décrit à titre indicatif, mais non limitatif.

Sur les dessins annexés :
- la figure 1 illustre très schématiquement, et en coupe, une installation permettant la mise en oeuvre de procédé selon l'invention ;
- la figure 2 montre des courbes illustrant les vitesses de densification obtenues avec un procédé selon l'invention et un procédé selon l'art antérieur ; et
- la figure 3 illustre très schématiquement, et en coupe, une installation permettant la mise en oeuvre du procédé selon l'invention pour la densification de pièces coniques.

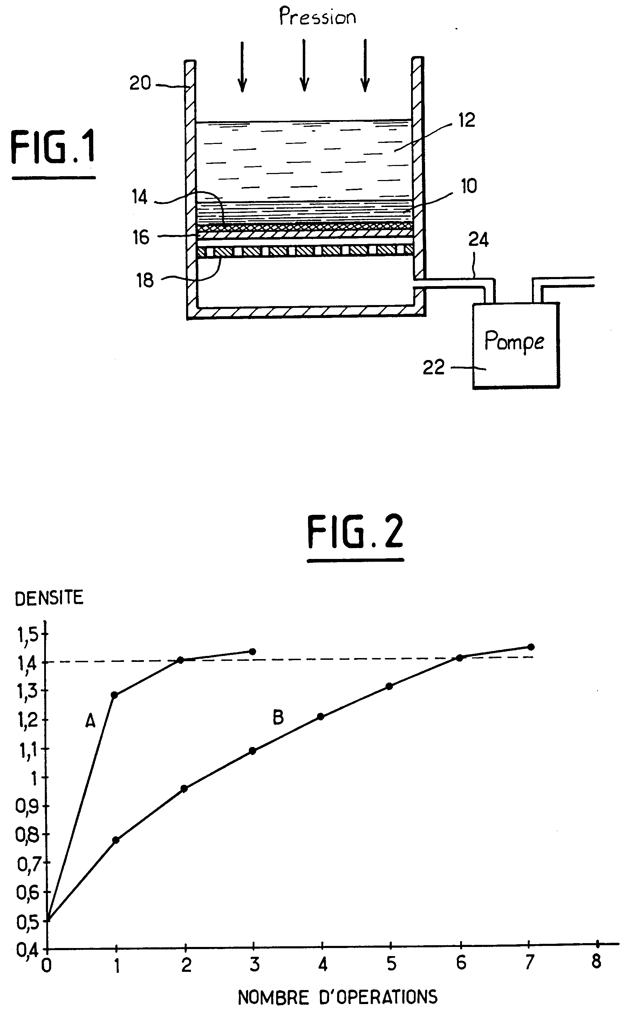

La figure 1 montre un substrat poreux 10 à densifier par du carbone, placé dans un bac 20 (figure 1), dans la partie inférieure de celui-ci.

La densification est réalisée par introduction d'une poudre ultrafine de carbone en suspension dans une barbotine 12 versée au-dessus du substrat 10. La barbotine 12 est obtenue à partir d'un mélange de noir de carbone, d'un liquide suspensif, de l'eau par exemple, et un défloculant, le mélange étant soumis à un passage dans un homogénéiseur.

Un filtre fin 14 est placé sous le substrat pour filtrer l'eau de la barbotine et retenir la poudre de carbone. Le filtre 14 est supporté par un tamis 16 situé au-dessus d'une paroi perforée 18.

Le passage de la barbotine 12 à travers le substrat 10 est provoqué en engendrant une différence de pression entre la partie inférieure du bac 20, sous le filtre 14 et la partie supérieure du bac. Cette différence de pression, qui peut aller de 6 bars à au moins 30 bars, selon l'épaisseur du substrat, est produite en exerçant une surpression sur la barbotine recouvrant le substrat 10 avec aspiration éventuelle dans le fond du bac. Cette aspiration peut être produite au moyen d'une pompe à vide 22 reliée au fond du bac au moyen d'une conduite 24. L'eau de la barbotine ayant traversé le filtre 14, le tamis intermédiaire 16 et la paroi 18 peut être extraite par la conduite 24.

Le passage de la barbotine peut être facilité en soumettant le bac 20 à des vibrations. A cet effet, le bac est monté sur une table vibrante, ou est couplé à un transducteur engendrant des vibrations ultrasonores.

### Exemple

Le substrat 10 est constitué par un empilement à plat de strates de tissu de carbone d'une épaisseur totale de 100 mm, les strates étant liées entre elles par aiguilletage. Le taux volume de fibres est de 25 %, c'est-à-dire une porosité initiale de 75 %.

La barbotine 12 est constituée par un mélange d'eau et de noir de carbone d'une granulométrie moyenne d'environ 0,2 micron. La barbotine contient environ 1 partie en poids de carbone par partie en poids d'eau.

Une pression de 30 bars est exercée sur la barbotine 12, la face inférieure du filtre 14 étant maintenue sous vide primaire (environ 20 mbars).

La barbotine s'infiltre à l'intérieur du substrat 10 qui est densifié progressivement par la poudre de carbone retenue par le filtre 14.

La densification est terminée au bout d'environ 4 heures.

Le substrat 10 densifié est extrait du bac 12 et séché en étuve. Le pesage du substrat permet de mesurer une densité de 1,31, représentant une porosité résiduelle de 28 %, la porosité ayant ainsi diminué de 75 % à 28 % en une seule opération.

Le substrat 10 densifié et séché est soumis ensuite à un cycle d'imprégnation par une résine phénolique suivie de la polymérisation et de la carbonisation de la résine. L'imprégnation par la résine est réalisée sous pression, en utilisant par exemple l'installation de la figure 1. La durée totale du cycle est d'environ 12 jours.

Après ce cycle d'imprégnation-polymérisation-carbonisation, la densité mesurée est de 1,41. Elle passe à 1,43 après un deuxième cycle identique au précédent. Ce deuxième cycle peut donc être considéré généralement comme superflu en raison de la faible augmentation de densité qu'il amène.

La courbe A de la figure 2 représente l'évolution de la densité du matériau densifié en fonction du nombre d'opérations, la première opération étant la densification sous pression par le noir de carbone, et les deuxième et troisième opérations étant les deux cycles d'imprégnation-polymérisation-carbonisation.

Une pièce en matériau composite obtenue après un cycle d'imprégnation-polymérisation-carbonisation est soumise à un essai de traction qui donne les résultats suivants :
Rt = 81 MPa, Rt étant la résistance à la traction,
All = 1 %, All étant l'allongement à la rupture, et
E = 19 GPa, E étant le module d'élasticité.

Une coupe du matériau montre que la densité est homogène dans toute l'épaisseur de celui-ci.

Des résultats analogues sont mesurés sur une pièce en matériau composite obtenue après deux cycles d'imprégnation-polymérisation-carbonisation, confirmant le caractère superflu du deuxième cycle.

### Exemple comparatif No 1

A titre de comparaison, un substrat identique au substrat 10 est soumis à une densification par voie liquide comprenant 7 cycles d'imprégnation-polymérisation-carbonisation, l'imprégnation étant réalisée également avec une résine phénolique. La durée totale de chaque cycle est d'environ 12 jours (intervalle de temps minimum séparant les débuts de deux cycles consécutifs).

La courbe B de la figure 2 représente l'évolution de la densité du matériau densifié en fonction du nombre d'opérations. On observe que c'est à la fin de la sixième opération (sixième cycle) que l'on aboutit à une densité de 1,41 égale à celle du matériau obtenu avec le procédé de l'exemple précédent, après deux opérations.

Une pièce en matériau composite ainsi obtenue est soumise au même essai en traction que dans l'exemple précédent. Les résultats obtenus sont :
Rt = 78 MPa
All = 0,79 %
E = 25 GPa.

Du point de vue de ses propriétés mécaniques, le matériau obtenu par le procédé conforme à l'invention est sensiblement équivalent à celui obtenu par densification par voie liquide, avec cependant un allongement à la rupture plus élevé. Par contre, le temps total de densification du matériau obtenu par le procédé selon l'invention, y compris le cycle terminal d'imprégnation-polymarisation-carbonisation, est considérablement plus court, puisqu'il est d'environ 2 semaines.

Dans ce qui précède, on a envisagé la densification du substrat par une poudre de noir de carbone.

Un ou plusieurs autres matériaux en poudre pourront être ajoutés à la poudre de carbone dans la barbotine 12.

Ainsi, des éléments inhibiteurs d'oxydation peuvent être introduits sous forme de poudre dans la matrice du matériau composites. Ces éléments sont par exemple en un matériau choisi parmi des carbures (tels que B₄C, SiC), nitrures (tel que BN) ou oxydes (tels que SiO₂). Le ou les inhibiteurs d'oxydation sont mélangés intimement avec la poudre de carbone lors de l'élaboration de la barbotine. La présence d'inhibiteur d'oxydation procure au matériau composite une meilleure tenue en atmosphère oxydante, un problème rencontré avec les matériaux composites à matrice carbone étant leur dégradation par oxydation du carbone.

Par ailleurs, la résine liant les particules de poudre de la matrice peut être introduite dans celle-ci sous forme de poudre, directement avec la poudre de carbone. La barbotine comprend alors la poudre de carbone, la poudre de résine et, éventuellement, une poudre d'un inhibiteur d'oxydation. Une résine précurseur du carbone apte à être introduite sous forme de poudre est la résine phénolique "RS 501" de la société française RHONE POULENC.

Le procédé de densification selon l'invention peut être mis en oeuvre sur des substrats autres que formés d'un empilement de strates à plat, pour obtenir des pièces en matériau composite de formes différentes.

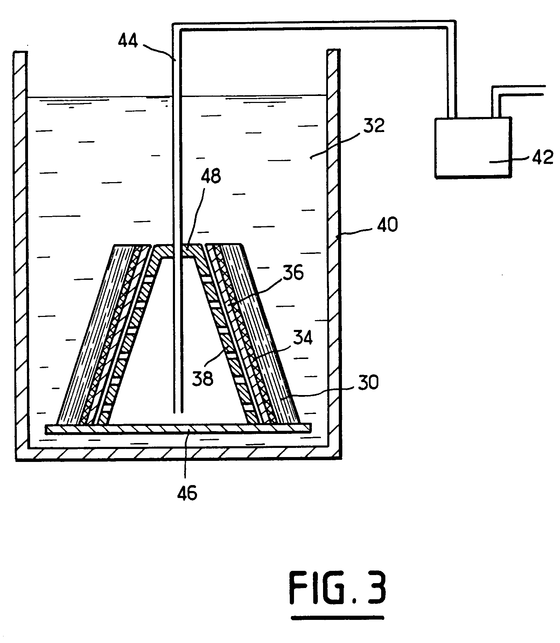

La figure 3 montre par exemple une installation permettant la densification d'un substrat 30 de forme conique (plus exactement tronconique).

Le substrat est disposé dans un bac 40 contenant une paroi perforée 38 ayant une forme conique correspondant à celle du substrat et disposée avec son axe vertical. Le substrat 30 est situé au dessus de la paroi perforée 38 avec interposition d'un filtre 34 et d'un tamis intermédiaire 36 disposés dans cet ordre entre le substrat et la paroi 38. La barbotine 32 est versée au dessus du substrat. La chambre 50 délimitée par la paroi perforée conique 38 fermée par un fond 46 à son extrémité inférieure et une paroi 48 à son extrémité supérieure est reliée à une pompe à vide 42 par une conduite 44.

## Revendications

1. Procédé de densification d'un substrat poreux par une matrice principalement en carbone, par imprégnation au moyen d'une barbotine contenant de la poudre de carbone et d'un précurseur liquide de carbone, et carbonisation du précurseur, pour l'obtention d'une pièce en matériau composite,
caractérisé en ce qu'il comprend les étapes qui consistent à :
- placer d'un côté du substrat poreux à densifier une barbotine contenant une poudre submicronique de carbone,
- établir une différence de pression pour forcer la barbotine à traverser le substrat,
- filtrer le liquide ayant traversé le substrat pour retenir la poudre de carbone à l'intérieur du substrat, et
- lorsque la densification du substrat par la poudre de carbone est terminée, sécher le substrat densifié et transformer en carbone, par carbonisation, le précurseur de carbone introduit dans le substrat afin de lier la poudre constituant la matrice.

2. Procédé selon la revendication 1, caractérise en ce que le précurseur du carbone est une résine introduite par imprégnation du substrat densifié et séché.

3. Procédé selon la revendication 1, caractérisé en ce que le précurseur du carbone est introduit sous forme de liquide mélangé à la poudre de carbone dans la barbotine

4. Procédé selon l'une quelconque des revendications 1 et 3, caractérisé en ce que la poudre de carbone est du noir de carbone ayant une granulométrie moyenne submicronique.

5. Procédé selon l'une quelconque des revendications 1 à 4, caractérisé en ce que la barbotine comprend en outre une poudre d'un matériau inhibiteur d'oxydation mélangée avec la poudre de carbone.

6. Procédé selon l'une quelconque des revendications 1 à 5, caractérisé en ce que, après carbonisation du liant, le matériau obtenu est soumis à une opération de graphitation.

7. Procédé selon l'une quelconque des revendications 1 à 6, caractérisé en ce que des vibrations sont appliquées au substrat lors du passage de la barbotine à travers celui-ci.

## Claims

1. Method of densifying a porous substrate by means of a matrix mainly of carbon, by impregnation by means of a slip containing carbon powder and of a liquid carbon precursor, and carbonization of the precursor, for obtaining an article made of composite material,
the method being characterized in that it comprises the following steps:
providing on one side of the porous substrate to be densified a slip containing submicron carbon powder;
establishing a pressure difference to force the slip through the substrate;
filtering the liquid that has passed through the substrate to retain the carbon powder inside the substrate; and
when densification of the substrate by means of the carbon powder has terminated, drying the densified substrate and transforming a carbon precursor introduced into the substrate into carbon by carbonization, thereby binding the powder constituting the matrix.

2. Method according to claim 1, characterized in that the carbon precursor is a resin which is introduced by being impregnated in the substrate after it has been densified and dried.

3. Method according to claim 1, characterized in that the carbon precursor is introduced in the form of a liquid which is mixed with the carbon powder in the slip.

4. Method according to any one of claims 1 to 3, characterized in that the carbon powder is carbon black having a submicron mean grain size.

5. Method according to any one of claims 1 to 4, characterized in that the slip further includes a powder of a material that inhibits oxidization mixed with the carbon powder.

6. Method according to any one of claims 1 to 5, characterized in that after the binder has carbonized, the resulting material is subjected to a graphitization operation.

7. Method according to any one of claims 1 to 6, characterized in that vibration is applied to the substrate while the slip is passing therethrough.

## Patentansprüche

1. Verfahren zur Verdichtung eines porösen Substrats durch eine hauptsächlich aus Kohlenstoff bestehenden Matrix durch Imprägnierung mittels einer Kohlenstoffpulver und einen flüssigen Kohlenstoff-Vorläufer enthaltenden Aufschlämmung und Karbonisierung des Vorläufers zur Erhaltung eines Teils aus Verbundmaterial,
**dadurch gekennzeichnet,**
daß es folgende Schritte aufweist:
- Anordnen einer ein submikronisches Kohlenstoffpulver enthaltenden Aufschlämmung an einer Seite des zu verdichtenden porösen Substrats,
- Anlegen einer Druckdifferenz, um die Aufschlämmung zu zwingen, das Substrat zu durchqueren,
- Filtrieren der Flüssigkeit, die das Substrat durchquert hat, um das Kohlenstoffpulver im Inneren des Substrats zurückzuhalten, und
- wenn die Verdichtung des Substrats durch das Kohlenstoffpulver beendet ist, Trocknen des verdichteten Substrats und Umwandeln des in das Substrat eingeführten Kohlenstoffvorläufers durch Karbonisierung in Kohlenstoff, um das die Matrix bildende Pulver zu binden.

2. Verfahren nach Anspruch 1,
**dadurch gekennzeichnet,**
daß der Kohlenstoffvorläufer ein durch Imprägnierung des verdichteten und getrockneten Substrats eingeführtes Harz ist.

3. Verfahren nach Anspruch 1,
**dadurch gekennzeichnet,**
daß der Kohlenstoffvorläufer in Form von dem Kohlenstoffpulver in der Aufschlämmung zugemischter Flüssigkeit eingeführt wird.

4. Verfahren nach einem der Ansprüche 1 und 3,
**dadurch gekennzeichnet,**
daß das Kohlenstoffpulver Ruß mit einer submikronischen mittleren Korngröße ist.

5. Verfahren nach einem der Ansprüche 1 bis 4,
**dadurch gekennzeichnet,**
daß die Aufschlämmung außerdem ein mit dem Kohlenstoffpulver gemischtes oxidationshemmendes Mittel enthält.

6. Verfahren nach einem der Ansprüche 1 bis 5,
**dadurch gekennzeichnet,**
daß nach Karbonisierung des Bindemittels das erhaltene Material einem Graphitisierungsvorgang unterzogen wird.

7. Verfahren nach einem der Ansprüche 1 bis 6,
**dadurch gekennzeichnet,**
daß auf das Substrat Schwingungen ausgeübt werden, wenn die Aufschlämmung durch es hindurchgeht.
